# EUROPEAN PATENT APPLICATION

(11) **EP 3 002 076 A1**
(43) Date of publication of application: **06.04.2016**
(21) Application number: 14460126.7
(22) Date of filing: 19.12.2014
(51) Int. Cl.: B23K 20/02, B23K 20/16, B23K 20/227, B23K 20/24, B23K 20/26, B23K 103/04, B23K 103/18

(54) **Method of diffusion welding in air of different metals**

(30) Priority: 08.09.2014 PL 40940314
(71) Applicant: "NewTech" Sp. z o.o., 41-500 Chorzow (PL)
(72) Inventor: Gubarev, Aleksandr, 443068 Samara (RU); Chabior, Roman, 40-031 Katowice (PL); Slapek, Stanislaw, 40-115 Katowice (PL); Iudakov, Vladmir, 443029 Samara (RU)
(74) Representative: Ziolkowska, Urszula

(57) **Abstract**

A method of diffusion welding in air of different metals by clamping and heating at the same time is described**,** wherein the metals are welded in an atmosphere of open air, wherein in the first stage the iinitial mechanical processing is mades carried out in the first stage is preferably a preliminary mechanical processing of end faces of metal blanks, consisting in dry grinding, preferably in an approximately sixth class of roughness, in the second stage the front surfaces of metal blanks are covered with preferably liquid hydrocarbons and/or in the form of pastes or gels, which are disintegrated during the welding process without solid residues, wherein the oxides do not occur before welding on the surface of blanks, the gas phases which form during heating, protect the area of welding against the access of free air and hence against oxidation, and then they are joined by centering faces preferably by clamp and the contact areas are heated by currents of high frequency using the loop inductor untill reaching the welding temperature (Tz) preferably a temperature dependent on the type of welded metals, and then the heating is switched off preferably for 2-3 seconds, and next the additonal impulse of heating is switched on to the welding temperature (Tz): In the range of from 0.75 to 0.95 of the melting point of the metal, when the number of impulses of heating depend on the diameter of welded parts, at least one, wherein the pressing force of metal blanks is not increased during the welding process.

## Description

The presented invention is the method of diffusion weldig in air of different metals.

From the polish patent no. 286195 is well-known a method of automatic matching of current to the welding speed in the process of continuous welding of pipe with the use of inductive welding machine of high-frequency and unit for automatical matching of current to the welding speed in the process of continuous welding of pipe with the use of inductive welding machine of high-frequency. The method according to the invention consists in determining the initial current value for the speed of the pipe V = 0, and determining the final current value for the speed of the pipe V = max. In the definite electric amplitude range, the signal of the speed of the pipe is entered in the continuous way, which is converted to electric signals of automatic matching of current to the welding speed. It is made with the help of the range according to the invention which consists of frequency-voltage converter, block of amplitude corrector, block of non-linear functor and block of thermal inertia corrector. Moreover, block of amplitude corrector and, summing block are connected to potentiometers R1 and R2.

From the polish patent no. 354163 is well-known a method of resistance point welding of metal elements on tuck. A method of resistance point welding of metal elements on tuck consists in the axial rotation of the electrodes which is used and / or rotation of the elements welded to the tuck at the time of clamping of electrodes and before the proper welding phase.

From the polish patent no. 392009 is well-known a method of resistance point welding of metal eemnts on tuck. The method of resistance point welding of metal elements on tuck with the modulation of current consists in the selection of its value, so that the at the beginning of welding, current has the initial value lower by at least 30% of the constant value of main current and the time of initial flow of welding current in the range of 10-15% of the total welding time, wherein the time of the initial current flow is determined depending on the type of welded material so that the amount of heat that is emitted at the place of contact of welded elements during welding must be greater than the heat emitted during welding with current of value of main current and the time which is the sum of the time of initial and main current flow. The value of current intensity of welding is determined depending on the type of material of welded elements. A smaller value of current intensity at the beginning of welding increases the total resistance value of the contact and in the contact area of welded elements, wherein the resistance of these areas depends on the temperature in these areas, and the time of disappearance of resistance in the contact increases to two times against the nominal parameters, and it is determined on the 20% of the total welding time in relation to the nominal time conditions of disappearance in the contact area, which is 10% of the total welding time.

From the polish patent no. 319475 is well-known a device for front welding of pipes made of thermoplastic material. A device for front welding of pipes made of thermoplastic material has base with a surface of placing on the working table, first, a front linear guide and placed behind it, a second linear guide for rider, owing to which at least two coaxial grips of pipes are movable relative to each other. The flat plane for the endings of pipes is placed along the third linear guide, which is renewable for heating element for softening the endings of pipes. In order to shorten the length of the arms, formed by the grip of pipes and to ease servicing, the second linear guide is located at a greater distance from the surface of placing than the first, the front linear guide. Preferably, the base of machine below the linear guide and the path of the movement of rider has the top wall, which is lying below the side walls and falling toward the front.

From the international patent application no. WO 2014/048885 A2 is well- known auxiliary welding for connecting parts conisting of screws having a head, a shank and a tip. The auxiliary welding of connecting parts driven by a mechanical means of thermal placing of components, which are made of weldable or poorly weldable material. Deformation occurs at the welding head during using the vehicle and as a result of mechanical deformations, so that the component can be connected by welding the connecting portion further auxiliary parts made of heat-sealable material, by welding.

From the international patent publication no. WO 98/13166 is well-known diffusion welding of metals by clamp, according to the invention the CRES pattern is used by applying increased pressure in the areas assigned for the diffusion bond, to increase quality of bonding and to reduce the processing time. CRES pattern is a model corresponding to the DB super-plastic fittings unit.

From the international patent no. WO 2012/093959 A1 is well-known an invention refering to a method of pipe welding by weldable polymer material, where the pipe has the endings and muff made of polymeric material, muff is placed on the tuck at the endings of pipes, muff is welded to the endings of pipes by placing electric conductor tape, which is so permeable for melted material between pipe and muff that power supply ( DC PU PU-AC )is connected with a set by feeder cable, and current is provided in order to heat the tape, in surrounded polymer material, so that it melts around a set in order to create weld, the intial temperature of weld surroundings TO is measured before warming up the heating set so that voltage UL and the electric current IL supplied to the set, are measured so that initial resistance R0 of the line is calculated before the set warms up so that the electric current supplied to the setcauses the increasent of resistnce R which is calculated on the basis of measured voltage and current.

From the international patent application no. WO 2013/152752 A1 is well-known a device for connecting the pipe endings, which are already smoothed, and which are made of steel, in particular by front welding process by weld, which is created by the pipe endings and tools, which can be moved to a welded connection in orbital way for welding and control of weld joint. The device consists of base plates, which can be placed on both sides of the pipe endings in the area of the welding place and which can be rigidly placed to the pipe endings. The base plates have circular recess with a radial opening for moving the pipes which are to be welded in order to centrally locate the pipes in the recess.

The purpose of the invention is developing new technology of diffusion nano-welding in airof different metals.

The method according to the invention consists in that the metals are welded in an atmosphere of open air, wherein in the first stage the iinitial mechanical processing is mades carried out in the first stage is preferably a preliminary mechanical processing of end faces of metal blanks, consisting in dry grinding, preferably in an approximately sixth class of roughness, in the second stage the front surfaces of metal blanks are covered with preferably liquid hydrocarbons and/or in the form of pastes or gels, which are disintegrated during the welding process without solid residues, wherein the oxides do not occur before welding on the surface of blanks, the gas phases which form during heating, protect the area of welding against the access of free air and hence against oxidation, and then they are joined by centering faces preferably by clamp and the contact areas are heated by currents of high frequency using the loop inductor untill reaching the welding temperature (Tz) preferably a temperature dependent on the type of welded metals, and then the heating is switched off preferably for 2-3 seconds, and next the additonal impulse of heating is switched on to the welding temperature (Tz): In the range of from 0.75 to 0.95 of the melting point of the metal, when the number of impulses of heating depend on the diameter of welded parts, at least one, wherein the pressing force of metal blanks is not increased during the welding process.

The following metals for welding are used: heat-resistant steels with structural steels, stainless steels with tool steels, colorful and active metals preferably titanium OT4 with niobium BH2A.

The advantages of the invention:
1. No wastages of metal
2. Carbon does not burn up in the contact area
3. No burrs
4. The number of defective products does not exceed 1%
5. The minimal length of the welding blank is 30 mm
6. The minimal diameter of the welding is 8 mm
7. Reduction of the length of the welded blank during the welding is 0.2 mm (there is no need to there is no need to equalize the length of the blank)
8. An extract of pipe for the machining processing does not exceed 0.5 mm.
9. In prouction of processing tools, the expensive high-speed steel (even to 70%) can be saved by combining it with structural steels (as grips)
10. The increasement of welding productivity in comparison to diffusion welding in vacuum (15-20 times)

Thanks to the invention, it is possible to weld different metal blanks with complex profile, on the size, according to assumed tolerance, heat-resisting and stainless steels, alloys, raw and hardened products.

During basic heating process, the crush of micro-roughness is observed and on the diffusion processes are progressing. By the additional heating, the equation of temperature in contact surface is observed, extention of active centers and intensification of diffusion processes. The mechanical chracteristics of welded bonding on the whole cross-section of element are the same.

The usage of the method considerably reuces the time of creating the element. Even 50% of metal is saved.

The method according to the invention can be used in construction of machine tool, in the automotive and oil industry, especially for welding pipes, in railway engineering-welding rails, for producing tools in tool factories- especially for welding tool endings of bits, rimers etc.

The solution according to the invention is described in the following examples.

### The heating of endings of the cutting tool

During nano- welding, it is possibile to weld the point cutting tool with a diameter of 8 mm and a minimal length of the blank to the welding of 30 mm. 70% of metal is saved, so it is possibile to save 700kg from 1000kg of high-speed steel.

Example: tap m8, a total length is 78 mm, working part 22 mm; a rimer with a diameter of 10 mm, a total length of 65 mm and working length of 15 mm. These parts can not be combined with an electric touch welding and they are machined from a homogeneous rod, working part and the core and the high-speed and structural steel are welded together in nano-welding.

It is possibile to save up to 70% of the metal.

50% of metal is saved in nano-welding from 14mm or more. It is possible to save 500kg from 1000kg of high-speed steel.

Example: a drill with a diameter of 18 mm, a total length 230 mm, working length 120 mm. The following extracts are used for the production of drill bits with electric contact welding: for the wastage of the metal along the length of 8-10 mm, for the mechanical working with a diameter of 6-8 mm etc. In nano-welding, the wastage of the metal is 0,2 mm, in the mechanical working, the wastage of the metal is 0,5 mm.

It is possibile to save up to 50% of metal.

### An example nr 1 (connecting a gear made of 12XH3A steel with a grip in the form of pipe made of 40X steel)

Metals are welded in air, wherein in the first stage, in the first stage there is a preliminary mechanical processing of end faces of metal blanks, consisting in dry grinding(in an approximately sixth class of roughness). In the second stage the front surfaces of metal blanks are covered with preferably liquid hydrocarbons and/or in the form of pastes or gels, which are disintegrated during the welding process without solid residues, wherein the oxides do not occur before welding on the surface of blanks , the gas phases which form during heating, protect the area of welding against the access of free air and hence against oxidation.

Then they are joined by centering faces preferably by clamp (5 kgs/mm²) and the contact areas are heated by currents of high frequency using the loop inductor untill reaching the welding temperature (Tz) - at temperature 1180°C, the heating was turned off.

Next the two additonal impulses of heating are switched on, each of them lasting 4 sec., with time delay of 3 sec., to the welding temperature (Tz): in the range of 0,83 of the melting point of the metal.

During welding process, the force was not increased.

### An example nr2 (connecting a rod ade of CT40X steel (as a grip) with P18 steel as a cutting part)

Metals are welded in air, wherein in the first stage, in the first stage there is a preliminary mechanical processing of end faces of metal blanks, consisting in dry grinding (in an approximately sixth class of roughness). In the second stage the front surfaces of metal blanks are covered with preferably liquid hydrocarbons and/or in the form of pastes or gels, which are disintegrate during the welding process without solid residues, wherein the oxides do not occur before welding on the surface of blanks , the gas phases which form during heating, protect the area of welding against the access of free air and hence against oxidation.

Then they are connected by centering faces preferably by clamp (5 kgs/mm²) and the contact areas are heated by currents of high frequency using the loop inductor untill reaching the welding temperature (Tz) - at temperature 1190°C, the heating was turned off.

Next the two additonal impulses of heating are switched on, each of them lasting 3 sec., with time delay of 1 sec., to the welding temperature (Tz): in the range of 0,86 of the melting point of the metal.

During welding process, the force was not increased.

## Claims

1. The method of diffsuion welding in air of different metals by clamping and heating at the same time, characteristic in that, the metals are welded in an atmosphere of open air, wherein in the first stage the iinitial mechanical processing is mades carried out in the first stage is preferably a preliminary mechanical processing of end faces of metal blanks, consisting in dry grinding, preferably in an approximately sixth class of roughness, in the second stage the front surfaces of metal blanks are covered with preferably liquid hydrocarbons and/or in the form of pastes or gels, which are disintegrated during the welding process without solid residues, wherein the oxides do not occur before welding on the surface of blanks , the gas phases which form during heating, protect the area of welding against the access of free air and hence against oxidation, and then they are joined by centering faces preferably by clamp and the contact areas are heated by currents of high frequency using the loop inductor untill reaching the welding temperature (Tz) preferably a temperature dependent on the type of welded metals, and then the heating is switched off preferably for 2-3 seconds, and next the additonal impulse of heating is switched on to the welding temperature (Tz): In the range of from 0.75 to 0.95 of the melting point of the metal, when the number of impulses of heating depend on the diameter of welded parts, at least one, wherein the pressing force of metal blanks is not increased during the welding process.

2. The method according to claim 1, characteristic in that, the following metals for welding are used: heat-resistant steels with structural steels, stainless steels with tool steels, colorful and active metals preferably titanium OT4 with niobium BH2A.

3. The method according to claim 1, characteristic in that, as hydrocarbons, hydrocarbons in liquid, gel or pastes, such as glycerol or an epoxy resin are used.
